# Europäisches Patentamt

## European Patent Office

## Office européen des brevets

(19)

(11) Publication number: **0 217 338**
**B1**

(12)

# EUROPEAN PATENT SPECIFICATION

(45) Date of publication of the patent specification:
27.06.90

(51) Int. Cl.⁵: **C09K 11/02, H01J 9/227**

(21) Application number: 86113372.6

(22) Date of filing: 29.09.86

(54) Method of forming a phosphor screen.

(30) Priority: 30.09.85 JP 216949/85

(43) Date of publication of application:
08.04.87 Bulletin 87/15

(45) Publication of the grant of the patent:
27.06.90 Bulletin 90/26

(84) Designated Contracting States:
DE FR GB

(56) References cited:
GB-A- 2 034 910
GB-A- 2 097 575

(73) Proprietor: KABUSHIKI KAISHA TOSHIBA, 72,
Horikawa-cho Saiwai-ku, Kawasaki-shi
Kanagawa-ken 210(JP)

(72) Inventor: Itou, Takeo Patent Division, KABUSHIKI
KAISHA TOSHIBA 1-1 Shibaura 1-chome, Minato-ku
Tokyo 105(JP)
Inventor: Sagou, Seiji Patent Division, KABUSHIKI
KAISHA TOSHIBA 1-1 Shibaura 1-chome, Minato-ku
Tokyo 105(JP)
Inventor: Watanabe, Shingo Patent Division, KABUSHIKI
KAISHA TOSHIBA 1-1 Shibaura 1-chome, Minato-ku
Tokyo 105(JP)

(74) Representative: Henkel, Feiler, Hänzel & Partner,
Möhlstrasse 37, D-8000 München 80(DE)

ACTORUM AG

# Description

The present invention relates to a method of forming a phosphor screen for a cathode ray tube.

In forming a phosphor screen for a cathode ray tube, it is known to form a powdery layer utilizing a photo adhesiveness, as disclosed in, for example, Japanese Patent Disclosure (Kokai) No. 55-32332. A resist film which exhibits adhesiveness when exposed to light is used in this technique so as to allow the phosphor particles to be attached to the light-exposed region of the resist film. The phosphor particles on the non-exposed region of the resist film are blown away by an air stream. This basic process is applied to each of blue, green and red phosphors. Ordinary phosphors such as ZnS and $Y_2O_2S$ are used in this technique. However, this prior art is defective in that the adhesiveness of the phosphor particles to the resist film is weak, with the result that the phosphor screen is made nonuniform in thickness during the step of blowing away the undesired phosphor particles.

Japanese Patent Disclosure (Kokai) No. 55-69934 discloses the idea of treating the phosphor surface with a powdery material such as $Zn(OH)_2$ or $Zn_3(PO_4)_2$ such that 0.01 to 2% by weight of the powdery material is attached to the phosphor. However, it has been clarified by the experiment conducted by the present inventors that the phosphor coated with the powdery material exhibits an unduly high adhesivity, leading to an insufficient flow of the phosphor particles. The phosphor particles, if forcedly caused to flow, have been found to be distributed over the entire faceplate, resulting in failure to produce a phosphor screen with a clear stripe pattern. In some cases, adhesivity of the phosphor particles has been found insufficient. In this case, a large number of pin holes are formed in the resultant phosphor screen, leading to an insufficient density in the phosphor screen.

The above-noted difficulties are thought to be derived from, for example, the fact that the particle diameter of the powdery material used for the surface treatment of the phosphor particle is not considered in the prior art exemplified above. Naturally, the optimum weight of the powdery material depends on the particle diameter thereof, making it impossible to determine the optimum amount of the powdery material used for the surface treatment of the phosphor particles unless the particle diameter of the powdery material is also defined. The optimum amount of the powdery material also depends on the method of preparing the powdery material, e.g., presence or absence of agglomeration.

An object of the present invention is to provide a method of forming a phosphor screen free from pin holes, to increase the density of the screen, and having a clear stripe pattern and preventing color blurring.

According to the present invention, there is provided a method of forming a phosphor screen, comprising the steps of coating a faceplate with a resist, which exhibits adhesiveness when irradiated with light, to form a resist film; selectively exposing the resist film to light to form an adhesive surface of a predetermined pattern; supplying phosphor particles having an average particle diameter of 3 to 20 microns to the faceplate so as to allow the phosphor particles to slide along the faceplate and, thus, to be attached to the adhesive surface of the faceplate; and removing the excess phosphor particles from the faceplate; characterized in that the surface of the phosphor particle is coated with a fine powdery material such that the specific surface area of the coated phosphor particle determined by the BET method is 1.5 to 4.0 times as large as that of the phosphor particle before the coating.

This invention can be more fully understood from the following detailed description when taken in conjunction with the accompanying drawing, in which:

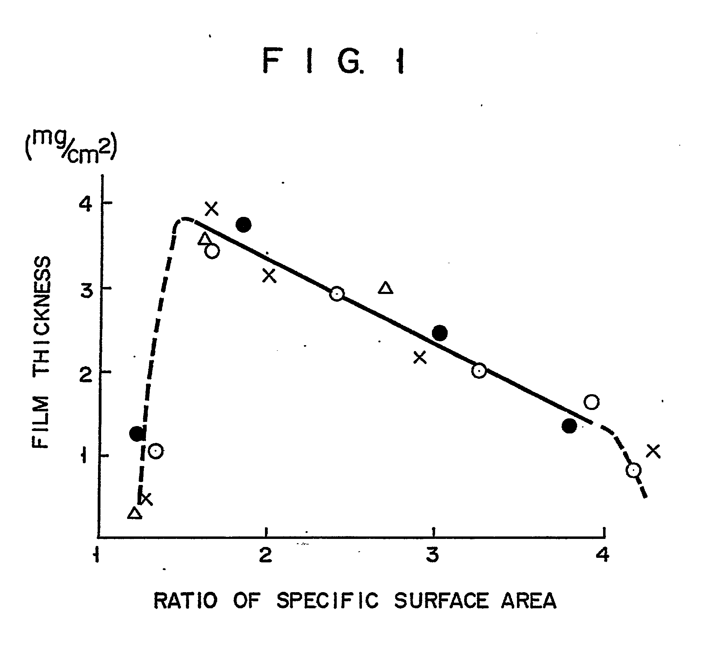

Fig. 1 shows the relationship between the thickness of the phosphor film and the ratio of the specific surface area of coated phosphor particle used in the present invention to that of the phosphor particle before the coating.

## Experiments

In the manufacture of a phosphor screen utilizing a resist which exhibits adhesivity when exposed to light, it is important for the phosphor particles to be highly slidable along a faceplate formed of, for example, glass, because the phosphor particles are repeatedly allowed to slide along the faceplate. If forcedly caused to slide along the faceplate, the phosphor particles are then scattered over the entire faceplate.

It is also important for the phosphor particles to have a high bonding strength with the adhesive region of the resist film. If the bonding strength is insufficient, the phosphor particles are incapable of withstanding the air pressure applied in the developing step, resulting in failure to obtain a phosphor screen of a desired thickness. In extreme cases, few phosphor particles remain attached to the resist film.

What should also be noted is that, in the case of using a resist film which exhibits adhesiveness when irradiated with light, the phosphor particles absorb water when attached to the adhesive region of the resist film. It follows that it is necessary to severely control the surface treating conditions.

The present inventors have conducted various experiments in which the surface of the phosphor particle was coated with various powdery materials, finding that the bonding strength between the coated phosphor particle and the adhesive region of the resist film depends greatly on the ratio of the coated phosphor particle to the phosphor particle before the coating in the specific surface area determined by the BET method. Fig. 1 is a graph showing the results of the experiments. The ratio in question is plotted on the abscissa of the graph, with the thickness of the film formed by the phosphor particles attached to the resist film being plotted on the ordinate. As seen from Fig. 1, the thickness of the formed film is markedly small where the ratio in the specific surface area plotted on the abscissa is smaller than 1.5, indicating that the bonding strength between the coated phosphor particle and the adhesive region of the resist film is so high that the sliding of the phosphor particles along the resist film is greatly restricted. Where the ratio in the specific surface area is at least 1.5, the phosphor particles are allowed to slide sufficiently along the resist film. However, the bonding strength between the phosphor particle and the adhesive region of the resist film is decreased with increase in the ratio in question. In other words, the ratio in the specific surface area should not be unduly large, in order to obtain a phosphor film of a reasonable thickness. Specifically, Fig. 1 shows that it is difficult to obtain a phosphor film of a reasonable thickness, if the ratio in question is larger than 4.0. What should also be noted is that the color blurring is eliminated with decrease in the bonding strength noted above. It follows that the ratio of the coated phosphor particle to the phosphor particle before the coating in the specific surface area should range between 1.5 and 4.0.

What should also be noted is that the tendency shown in Fig. 1 can be obtained substantially regardless of the kind and particle size of the powdery coating material as well as the kind of the phosphor body, as seen from Fig. 1. Specifically, "o" in Fig. 1 represents a blue phosphor of ZnS:Ag having an average particle diameter of 6 microns and coated with a powdery $SiO_2$ having an average particle diameter of about 0.5 micron; "Ø" represents said blue phosphor coated with a powdery $SiO_2$ having an average particle diameter of 9bout 0.1 to 0.2 micron; "△" represents a red phosphor of $Y_2O_2S:Eu$ having an average particle diameter of about 6.5 microns and coated with a powdery $SiO_2$ having an average particle diameter of about 0.5 micron; and "x" represents said red phosphor coated with a powdery $Zn(OH)_2$ having an average particle diameter of about 0.3 micron. Clearly, substantially the same relationship between the ratio in the specific surface area and the thickness of the formed film is obtained regardless of the phosphor-coating material combination.

The data shown in Fig. 1 covers phosphor particles having an average diameter of 6 microns or 6.5 microns. The tendency shown in Fig. 1 remains unchanged as far as the average diameter of the phosphor particles falls within the range of 3 to 20 microns.

It is desirable to use a powdery coating material having a maximum particle diameter of 1 micron. If the particle diameter is larger than 1 micron, the coating material tends to peel off the phosphor body. In addition, the brightness of the formed phosphor screen is reduced. Also, it is possible to use in place of the powdery coating material a surface treating agent which forms a film such as water glass or choline-$SiO_2$, when uncontinuous.

In some cases, in addition to a surface treating agent the phosphor particle is coated with an organic or inorganic pigment ($Fe_2O_3$. $CoO \cdot nA\ell_2O_3$, ultramarine etc.) in order to improve the contrast of the phosphor screen. If the pigment is used as a part of the powdery coating material as defined in the present invention, it is possible to obtain substantially the same effect.

## Example 1

Green phosphor particles of ZnS:Cu having an average particle diameter of 6.5 microns were dispersed in a dispersion of powdery $SiO_2$ having an average particle diameter of 0.05 micron, followed by adding an aqueous solution containing a sulfate acting as a surface treating agent of the $SiO_2$ particles. The conditions such as the weight ratio of the phosphor particles to the $SiO_2$ dispersion and the stirring time of the dispersion were controlled so as to obtain phosphor particles coated with the powdery $SiO_2$. The coated phosphor particles were found to have a specific surface area of 0.37 $m^2/g$ as determined by the BET method. The measuring is conducted under nitrogen gas and by the isothermal absorption method. On the other hand, the specific surface area of the phosphor particles before the coating was 0.22 $m^2/g$. In other words, the specific surface area of the coated phosphor particles was 1.7 times as large as that of the phosphor particles before the coating. Also, blue phosphor particles of ZnS:Ag and red phosphor particles of $Y_2O_2S:Eu$ were similarly treated so as to obtain coated phosphor particles having a specific surface area of 0.33 $m^2/g$ (blue phosphor) and 0.55 $m^2/g$ (red phosphor) as determined by the BET method. The ratio of the coated phosphor particles to the phosphor particles before the coating in the specific surface area was 1.5 for the blue phosphor and 2.5 for the red phosphor.

On the other hand, a faceplate was coated with resist which exhibits adhesiveness upon irradiation with light, said resist consisting of 3% by weight of 4-dimethylaminobenzene diazonium-zinc chloride complex salt, 0.2% by weight of propylene glycol alginate, 0.01% by weight of Pluronic L-92 (trademark of a surfactant), and the balance of water, followed by selectively exposing the coated faceplate to light. Then, the coated blue phosphor particles prepared in advance were supplied to the faceplate to allow the phosphor particles to slide along the faceplate several times, followed by performing an air development so as to form a blue phosphor layer in the exposed portion of the resist film. Then, green and red phosphor layers were formed on the faceplate by the similar procedures. The resultant phosphor screen was found to have a thickness of 2 to 3 $mg/cm^2$. Also, a phosphor screen free from color blurring and pin holes was obtained with a high reproducibility.

## Example 2

Coated phosphor particles were prepared as in Example 1, except that blue, green and red phosphor particles each having an average particle diameter of 6.5 microns were dispersed in a dispersion of very fine powdery $SiO_2$ having an average particle diameter of 0.01 micron. The specific surface area of the coated phosphor particles was found to be 2 to 3 times as large as that of the phosphor particles before the coating. In Example 2, the amount of $SiO_2$ powder used was about one-fifth the weight in Example 1. On the other hand, Example 2 was substantially equal to Example I in the thickness and quality of the phosphor screen produced.

## Example 3

Red phosphor particles of $Y_2O_2S:Eu$ having an average particle diameter of 6 microns were added to an aqueous solution of $ZnSO_4$. While sufficiently stirring the solution, ammonia was added to the solution so as to control the pH value at 7 to 8 and, thus, to deposit $Zn(OH)_2$ on the surfaces of the phosphor particles. The resultant phosphor particles were washed with water and, then, dried so as to obtain phosphor particles coated with a powdery $Zn(OH)_2$ having an average particle diameter of 0.3 micron. The specific surface area of the coated phosphor particles determined by the BET method was twice the value before the coating. A phosphor screen for a color picture tube was prepared by using the coated red phosphor particles thus prepared together with the coated blue and green phosphor particles prepared in Example I. The resultant phosphor screen was found substantially equal to that obtained in Example I in thickness and quality.

## Example 4

Green phosphor particles of $ZnS:Cu$, $Al$ having an average particle diameter of 8 microns were dispersed in water. Then, water glass and aluminum sulfate were added to the dispersion so as to control the pH value at 6 to 7 and, thus, to deposit $Al_2O_3$ particles on the surfaces of the phosphor particles. The average particle diameter of the $Al_2O_3$ particles was 0.1 micron. Also, the specific surface area of the coated phosphor particles determined by the BET method was 2 times as large as that of the phosphor particles before the coating. A phosphor screen for a color picture tube was prepared by using the coated green phosphor particles thus prepared, together with the coated blue and red phosphor particles prepared in Example I. The resultant phosphor screen was found substantially equal to that obtained in Example I in thickness and quality.

In the examples described above, the method of the present invention is applied to the formation of a phosphor screen for a color picture tube. However, the present invention can be applied to the formation of a phosphor screen for various cathode ray tubes such as a projection picture tube and a monochromatic picture tube.

## Claims

1. A method of forming a phosphor screen, comprising the steps of coating a faceplate with a resist, which exhibits adhesiveness when irradiated with light, to form a resist film; selectively exposing the resist film to light to form an adhesive surface of a predetermined pattern; supplying phosphor particles having an average particle diameter of 3 to 20 microns to the faceplate so as to allow the phosphor particles to slide along the faceplate and, thus, to be attached to the adhesive surface of the faceplate; and removing the excess phosphor particles from the faceplate; characterized in that the surface of the phosphor particle is coated with a fine powdery material such that the specific surface area of the coated phosphor particle determined by the BET method is I.5 to 4.0 times as large as that of the phosphor particle before the coating.

2. The method according to claim I, characterized in that said fine powdery material is selected from the group consisting of $SiO_2$, $Zn(OH)_2$, $Al_2O_3$, $Fe_2O_3$, $CoO \cdot nAl_2O_3$ and ultramarine.

## Patentansprüche

1. Verfahren zur Herstellung eines Leuchtstoffschirms durch Beschichten einer Stirnplatte mit einem bei Bestrahlung mit Licht klebrig werdenden Resist zur Bildung eines Resistfilms, selektives Belichten des Resistfilms zur Bildung einer klebenden Oberfläche eines gegebenen Musters, Zufuhr von Leuchtstoffteilchen eines durchschnittlichen Teilchendurchmessers von 3–20 µm zu der Stirnplatte, derart, daß die Leuchtstoffteilchen längs der Stirnplatte rutschen können und dabei an der klebenden Oberfläche der Stirnplatte hängen bleiben, und Entfernen der überschüssigen Leuchtstoffteilchen von der Stirnplatte, dadurch gekennzeichnet, daß die Oberfläche des Leuchtstoffteilchens mit einem feinpulverigen Material derart beschichtet ist, daß die nach der BET-Methode ermittelte spezifische Oberfläche des beschichteten Leuchtstoffteilchens 1,5- bis 4,0mal größer als diejenige des Leuchtstoffteilchens vor der Beschichtung.

2. Verfahren nach Anspruch 1, dadurch gekennzeichnet, daß das feinpulverige Material aus der Gruppe $SiO_2$, $Zn(OH)_2$, $Al_2O_3$, $Fe_2O_3$, $CoO \cdot nAl_2O_3$ und Ultramarin ausgewählt ist.

## Revendications

1. Procédé de fabrication d'un écran fluorescent qui comprend les étapes de revêtir un fond avec une résine photosensible qui présente une adhésivité lorsqu'elle est exposée à la lumière, pour former une couche de résine photosensible, d'exposer sélectivement la couche de résine photosensible à la lumière pour former une surface adhésive d'un motif prédéterminé, d'apporter des particules de substance fluorescente ayant un diamètre moyen de 3 à 20 µm sur le fond de façon à permettre aux particules de substance fluorescente de glisser sur le fond et de se fixer ainsi à la surface adhésive du fond, et d'éliminer du fond les particules de substance fluorescente en excès, caractérisé en ce que la surface des particules de substance fluorescente est revêtue d'un matériau en poudre fine de telle façon que la surface spécifique des particules de substance fluorescente revêtues, déterminée par la méthode BET, soit 1,5 à 4,0 fois plus grande que la surface des particules de substance fluorescente avant le revêtement.

2. Procédé selon la revendication 1, caractérisé en ce que ledit matériau en poudre fine est choisi dans le groupe formé par $SiO_2$, $Zn(OH)_2$, $Al_2O_3$, $Fe_2O_3$, $CoO \cdot nAl_2O_3$ et l'outremer.

# F I G. 1